Europäisches Patentamt

European Patent Office

Office européen des brevets

(19)

(11) **EP 1 116 322 B1**

(12) **EUROPÄISCHE PATENTSCHRIFT**

(45) Veröffentlichungstag und Bekanntmachung des Hinweises auf die Patenterteilung:
**14.08.2002 Patentblatt 2002/33**

(21) Anmeldenummer: **99969547.1**

(22) Anmeldetag: **10.09.1999**

(51) Int Cl.⁷: **H02P 7/622**, H02P 5/402, G01P 3/48

(86) Internationale Anmeldenummer:
**PCT/DE99/02876**

(87) Internationale Veröffentlichungsnummer:
**WO 00/17999 (30.03.2000 Gazette 2000/13)**

(54) **VERFAHREN UND VORRICHTUNG ZUM MESSEN DER DREHZAHL EINER INDUKTIONSMASCHINE**

METHOD AND APPARATUS FOR MEASURING THE SPEED OF AN INDUCTION MACHINE

PROCEDE ET DISPOSITIF POUR MESURER LA VITESSE D'UNE MACHINE INDUCTIVE

(84) Benannte Vertragsstaaten:
**AT BE CH CY DE DK ES FI FR GB GR IE IT LI LU MC NL PT SE**

(30) Priorität: **21.09.1998 DE 19843133**

(43) Veröffentlichungstag der Anmeldung:
**18.07.2001 Patentblatt 2001/29**

(73) Patentinhaber: **SIEMENS AKTIENGESELLSCHAFT 80333 München (DE)**

(72) Erfinder:
• **GRIEPENTROG, Gerd**
  **D-91058 Erlangen (DE)**
• **RUNGGALDIER, Diethard**
  **D-96135 Stegaurach (DE)**

(56) Entgegenhaltungen:
**EP-A- 0 512 372**   **DE-A- 19 503 658**
**US-A- 5 548 197**   **US-A- 5 644 205**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zum Messen der Drehzahl einer Induktionsmaschine, deren Stator über einen steuerbaren Wechselstromsteller an ein ein- oder mehrphasiges Wechselspannungsnetz angeschlossen ist. Daneben bezieht sich die Erfindung auf eine Einrichtung zur Ermittlung der Drehzahl einer Induktionsmaschine gemäß dem Oberbegriff des Patentanspruches 8.

Zur Anpassung der einer Induktionsmaschine zugeführten elektrischen Leistung an die jeweils aktuellen Lastverhältnisse, insbesondere beim Anlaufen und Abbremsen, ist es bekannt, steuerbare Wechselstromsteller einzusetzen.

Ein solcher mikroprozessorgesteuerter Wechselstromsteller bzw. Softstarter, wie er beispielsweise aus der EP 0 454 697 B1 bekannt ist, arbeitet nach dem Phasenanschnitt-Prinzip und dient im wesentlichen dem ruckfreien Anund Auslauf von Drehstrom-Asynchronmaschinen. Hierzu werden meist drei Ventilanordnungen, im allgemeinen bestehend aus jeweils zwei antiparallelen Thyristoren, durch einen Mikroprozessor angesteuert.

Die Steuereinrichtung des bekannten Drehstromstellers verfügt über keine Informationen zur aktuellen Drehzahl der Maschine. Dies kann bei bestimmten mechanischen Lastverhältnissen zu einer ungünstigen Betriebsweise des gesamten Antriebes führen. So kann es während des Auslaufs eines Pumpenantriebes zu einem abrupten Drehzahlabfall kommen, der zu extrem hohen Drücken im Rohrleitungssystem und damit zu starken mechanischen Belastungen bzw. sogar zur Zerstörung der Anlage führen kann. Sinngemäß Entsprechendes gilt für den Start von Antrieben, wenn ein Drehzahlanstieg abrupt erfolgt.

Bei Kenntnis der Drehzahl kann mit Hilfe der Steuereinrichtung, in der Regel ein Mikroprozessor, eine Drehzahl-Beeinflussung realisiert werden, die einen weitestgehend ruckfreien An- und Auslauf des Antriebes auch bei ungünstigen mechanischen Lastverhältnissen gestattet.

Die DE 27 15 935 A1 offenbart eine Hochlaufüberwachung von Asynchronmaschinen, bei der der Phasenwinkel zwischen Strom und Spannung bestimmt und hieraus eine binäre Information über den Hochlauf der Maschine abgeleitet wird. Erfolgt der Hochlauf nicht innerhalb eines bestimmten Zeitraumes, wird zur Vermeidung von thermischen Überlastungen die Maschine wieder vom Netz getrennt.

In der US 5 548 197 A werden die Stromnulldurchgänge der drei Statorströme erfaßt, wozu u.a. die über den Thyristoren meßbare Spannung genutzt wird. Aus zwei unmittelbar aufeinander folgenden Stromnulldurchgängen wird ein Fehlersignal gebildet, indem die Zeitpunkte der Nulldurchgänge voneinander subtrahiert und anschließend ein Sechstel der Netzperiode abgezogen wird. Das um den Nullpunkt schwankende Fehlersignal wird einer Frequenzanalyse unterzogen und hieraus die Drehzahl des Rotors bestimmt. Netzstörungen können hierbei zu einer Verfälschung des Meßsignals führen.

Ein Verfahren, welches die Polarität der induzierten Klemmenspannung speziell während eines Auslaufvorgangs einer Induktionsmaschine mittels Drehstromsteller mißt und die Drehzahl aus dem zeitlichen Versatz der Polaritätswechsel der einzelnen Spannungen bestimmt, wird in der EP 0 512 372 B1 beschrieben. Während des Auslaufvorganges existieren ohnehin Zeitabschnitte, in denen die Induktionsmaschine vom Netz getrennt ist und demnach auch keine Ströme im Stator fließen. Eine eigens zur Messung der Drehzahl notwendige Unterbrechung der Stromzuführung ist daher nicht notwendig. Zum Abbremsen der Induktionsmaschine werden dabei bestimmte Zündfolgen von Thyristoren vorgegeben und der zeitliche Versatz beim jeweiligen Polaritätswechsel als Frequenz zur Drehzahlbestimmung ausgewertet. Für den allgemeinen An- und Auslauf wird hingegen kein Verfahren angegeben.

Die US 5 644 205 A und die DE 195 03 658 C3 geben jeweils für Maschinen mit Frequenzumrichter-Steuerung ein Verfahren zur Messung der Rotor-Winkelgeschwindigkeit an, welche die Frequenz der induzierten Spannung nach Abschaltung der Stromversorgung der Maschine zur Bestimmung der Rotor-Winkelgeschwindigkeit nutzen. Wegen der wesentlich unterschiedlichen Funktionsprinzipien von Frequenzumrichtern und Drehstromstellern ist das aus den zitierten Schriften bekannte Verfahren der Erzeugung eines stromlosen Stators nicht auf die mittels Drehstromsteller gesteuerte Maschine übertragbar.

Vom Stand der Technik ausgehend liegt der Erfindung die Aufgabe zugrunde, ein Verfahren zum Messen der Drehzahl einer Induktionsmaschine anzugeben, das während der Beschleunigung beim Starten der Induktionsmaschine einfach durchgeführt werden kann und bei dem ein zusätzlicher Meßwertaufnehmer zum Erfassen der Drehzahl nicht erforderlich ist. Außerdem liegt der Erfindung die Aufgabe zugrunde, eine Einrichtung zum Steuern einer derartigen Induktionsmaschine anzugeben.

Die erstgenannte Aufgabe wird gemäß der Erfindung gelöst mit einem Verfahren mit den Merkmalen des Patentanspruches 1. Bei dem Verfahren zum Messen der Drehzahl einer Induktionsmaschine, deren Stator über einen steuerbaren Wechselstromsteller an ein ein- oder mehrphasiges Wechselspannungsnetz angeschlossen ist, wird der Stator für zumindest einen vorgegebenen Zeitabschnitt durch Steuern der Ventile des Wechselstromstellers vom Wechselspannungsnetz getrennt. In diesem Zeitabschnitt wird zumindest eine im Stator durch die Drehbewegung des Läufers induzierte Statorspannung gemessen. Aus den so gewonnenen Meßwerten wird die Frequenz dieser Statorspannung ermittelt und daraus die Drehzahl der Induktionsmaschine abgeleitet.

Während der Beschleunigung der Induktionsmaschine wird somit der Stator vorübergehend in einen stromlosen Zustand versetzt. Während des statorstromlosen Zeitabschnittes fließt im Rotor ein langsam abklingender Gleichstrom, wodurch der Rotor bezogen auf das Rotor-Koordinatensystem als rotierender Magnet nahezu konstanter magnetischer Durchflutung angesehen werden kann. Durch die Rotation werden an den Statorklemmen der Induktionsmaschine Spannungen (Klemmenspannungen) induziert, deren Frequenz dem Produkt aus der bekannten Polpaarzahl p und der zu bestimmenden mechanischen Drehzahl entspricht.

Die Drehzahl des Rotors wird erfindungsgemäß über die Frequenz des aufgrund der induzierten Spannung ermittelbaren Stator-Spannungsraumzeigers während eines mit Hilfe des steuerbaren Wechselstromstellers gezielt erzeugten Zeitabschnittes, in dem der Stator stromlos ist, erfaßt. Die Zeitdauer dieses Zeitabschnittes ist erfindungsgemäß kleiner als die Zeitdauer einer halben Periode der Netzspannung, um die Betriebsweise des Antriebs nur gering zu beeinflussen.

Aus den gleichen Gründen wird in einer weiteren bevorzugten Ausgestaltung der Erfindung die Drehzahlmessung nach vorgenanntem Verfahren nach bestimmten Zeitabständen wiederholt, die vorzugsweise das 5 bis 15-fache einer Periode der Netzspannung betragen.

Vorzugsweise werden als Ventilanordnungen Thyristoren verwendet und die Induktionsmaschine vom Wechselspannungsnetz durch Auslassen der zum Zünden der Thyristoren erforderlichen Zündsignale getrennt.

In einer besonders bevorzugten Ausgestaltung der Erfindung erfolgt bei einer dreiphasigen Induktionsmaschine zur Wiederaufnahme des Netzbetriebes der Induktionsmaschine das erste Zündsignal für die zuerst geöffnete erste Ventilanordnung einer Phase zeitlich um ein Mehrfaches der halben Netzperiode verzögert gegenüber dem letzten Zündsignal für diese erste Ventilanordnung. Gleichzeitig mit dem erneuten Zünden dieser ersten Ventilanordnung wird ein im Normalbetrieb als zeitlich nachfolgende Ventilanordnung zu zündende zweite Ventilanordnung gezündet. Das Zünden der dritten Ventilanordnung erfolgt anschließend um 1/6 der Netzperiode zeitlich verzögert nach dem Zünden der ersten Ventilanordnung, wobei anschließend die vor dem Abschalten vorliegende Zündsignalfolge wiederhergestellt wird. Durch diese Maßnahme ist sichergestellt, daß die durch die Drehzahlmessung folgende Unterbrechung der Spannungsversorgung der Induktionsmaschine einen möglichst geringen Einfluß auf den Weiterbetrieb der Induktionsmaschine hat.

In einer weiteren vorteilhaften Ausgestaltung des Verfahrens werden während des statorstromlosen Zeitabschnittes bei einem mehrphasigen Wechselspannungsnetz die in den Statorwicklungen zwischen den Statorklemmen jeweils induzierten Klemmenspannungen gemessen. Insbesondere wird aus den Meßwerten der Klemmenspannung jeweils der Winkel des Raumzeigers der induzierten Statorspannung berechnet.

Bei zeitlich diskreter Abtastung der induzierten Klemmenspannung ist die Taktrate dabei so bemessen, daß innerhalb des Zeitabschnittes für eine möglichst große Anzahl von Zeitpunkten die zugehörigen Winkel des Raumzeigers der induzierten Statorspannung berechnet werden. Den ermittelten Winkeln des Raumzeigers wird innerhalb des statorstromlosen Zeitabschnittes eine Gerade zugeordnet, aus deren Steigung die Drehzahl der Induktionsmaschine bestimmt wird.

Die zweitgenannte Aufgabe wird gemäß der Erfindung gelöst mit einer Einrichtung mit den Merkmalen des Patentanspruches 8. Die Einrichtung zum Steuern einer Induktionsmaschine, deren Stator über einen Wechselstromsteller an ein ein- oder mehrphasiges Wechselspannungsnetz angeschlossen ist, enthält eine Steuereinrichtung zum Steuern des Wechselstromstellers und zum Trennen des Stators für einen vorgegebenen Zeitabschnitt, der kleiner als eine halbe Periode der Netzspannung ist, durch Öffnen der Ventilanordnungen des Wechselstromstellers vom Wechselspannungsnetz, eine Spannungsmeßeinrichtung zum Messen zumindest einer in diesem Zeitabschnitt im Stator durch die Drehbewegung des Läufers induzierten Statorspannung, und eine Recheneinrichtung zum Berechnen der Frequenz dieser Statorspannung aus dem so gewonnenen Meßwerten und zum Berechnen der Drehzahl der Induktionsmaschine aus dieser Frequenz, wobei an einem Ausgang der Recheneinrichtung ein aus der Drehzahl abgeleitetes Steuersignal für die Steuereinrichtung ansteht, das über eine Steuerleitung an die Steuereinrichtung geführt ist.

Weitere bevorzugte Ausführungsformen der Einrichtung ergeben sich gemäß der Unteransprüche 9 bis 12.

Zur weiteren Erläuterung der Erfindung wird auf das Ausführungsbeispiel der Zeichnung verwiesen, in deren

FIG 1 eine erfindungsgemäße Einrichtung zum Steuern einer dreiphasigen Induktionsmaschine in einem schematischen Blockschaltbild veranschaulicht ist. In

FIG 2 sind die in den Statorwicklungen fließenden Ströme in einem Diagramm gegen die Zeit aufgetragen. In

FIG 3 sind die zwischen den Klemmen des Stators jeweils gemessenen Klemmenspannungen ebenfalls in einem Diagramm gegen die Zeit aufgetragen.

FIG 4 zeigt den zeitlichen Verlauf des Winkels des Raumzeigers der induzierten Spannung ebenfalls in einem Diagramm.

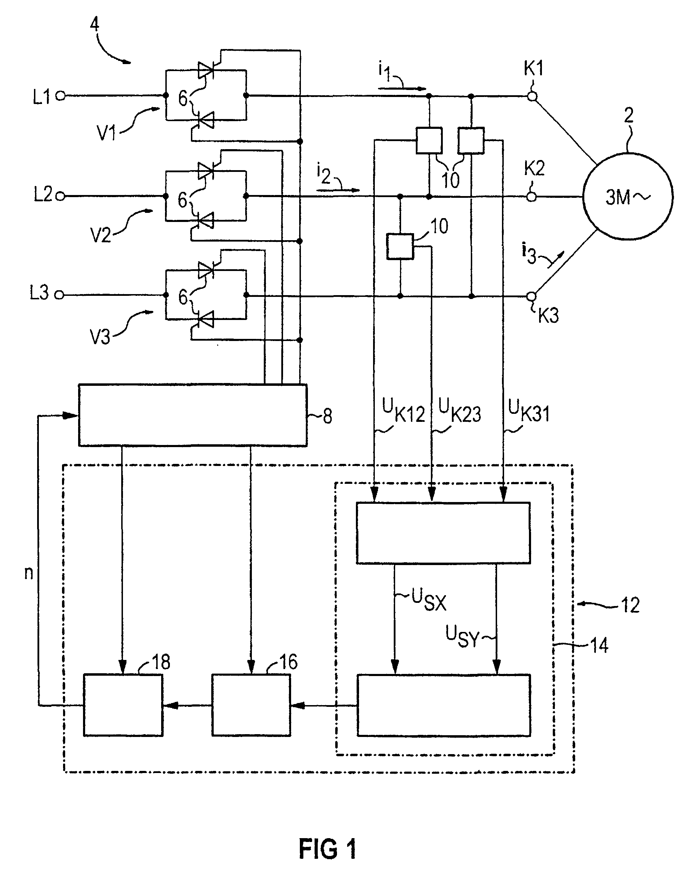

Gemäß FIG 1 ist eine Induktionsmaschine 2, im Beispiel eine Drehstrom-Asynchronmaschine, über einen dreiphasigen Wechselstromsteller 4 (Drehstromsteller) an die Phasen L1,L2,L3 eines dreiphasigen Netzes angeschlossen. Jeder Phase L1,L2,L3 ist eine Ventilanordnung V1,V2,V3 zugeordnet, die im Ausführungsbeispiel jeweils aus zwei antiparallel geschalteten Thyristoren 6 bestehen. Die Zündelektroden der Thyristoren 6 sind an eine Steuereinrichtung 8 angeschlossen, mit der die zum Zünden der Thyristoren 6 erforderlichen Zündsignale in einer vorgegebenen zeitlichen Abfolge bereitgestellt werden.

Zwischen die Statorklemmen K1,K2,K3 der Induktionsmaschine 2 ist jeweils eine Spannungsmeßeinrichtung 10 geschaltet, an deren Ausgang die zwischen den betreffenden zwei Statorklemmen K1,K2,K3 jeweils auftretende Klemmenspannung $u_{K12}, u_{K23}, u_{K31}$ bereitsteht. Alternativ hierzu können auch jeweils die Spannungen zwischen einer Statorklemme K1,K2,K3 und einem in der Figur nicht dargestellten Mittelpunktsleiter gemessen und daraus die Klemmenspannungen $u_{K12}$, $u_{K23}$, $u_{K31}$ abgeleitet werden.

Die Ausgänge der Spannungsmeßeinrichtungen 10 sind an eine Recheneinrichtung 12 angeschlossen, in der die am Eingang beispielsweise kontinuierlich anstehenden analogen Spannungssignale $u_{K12}, u_{K23}, u_{K31}$ weiterverarbeitet werden. Die Recheneinrichtung 12 enthält eine erste Recheneinheit 14, in der die in Form analoger Meßwertsignale vorliegenden Klemmenspannungen $u_{K12}$, $u_{K23}$, $u_{K31}$ einer Koordinatentransformation unterzogen werden, bei der die Komponenten $u_{Sx}$ und $u_{Sy}$ des Raumzeigers $u_S^{\angle}$ der induzierten Statorspannung und daraus der Winkel $\gamma$ des Raumzeigers $u_S^{\angle}$ dieser Statorspannung berechnet werden. Die auf diese Weise anstehenden Werte für den Winkel $\gamma$ des Raumzeigers $u_S^{\angle}$ werden fortlaufend in einen Speicher 16 eingeschrieben.

Dem Speicher 16 ist eine zweite Recheneinheit 18 nachgeschaltet, in der die im Speicher 16 gespeicherten Winkel $\gamma$ ausgelesen und zur Berechnung der Drehzahl n der Induktionsmaschine 2 herangezogen werden. Die im Speicher 16 eingeschriebenen Werte für den Winkel $\gamma$ werden dabei in der zweiten Recheneinheit 18 nur in einem Zeitabschnitt weiterverarbeitet, in dem sichergestellt ist, daß der Stator der Induktionsmaschine 2 stromlos ist. Die Initialisierung des Auslese- und Rechenvorgangs in der zweiten Recheneinheit 18 wird dabei durch die Steuereinrichtung 8 vorgenommen, in der die Programmroutine für den Meßablauf gespeichert ist. Am Ausgang der Recheneinrichtung 12 steht ein zur Drehzahl n korrespondierendes Steuersignal an, das an einen Eingang der Steuereinrichtung 8 geführt ist und dort zur Steuerung der Induktionsmaschine 2 verwertet wird.

Die zweite Recheneinheit 18 wird somit nur in einem Zeitabschnitt initialisiert, in dem sichergestellt ist, daß in den Phasen L1,L2,L3 keine Statorströme $i_1, i_2, i_3$ fließen.

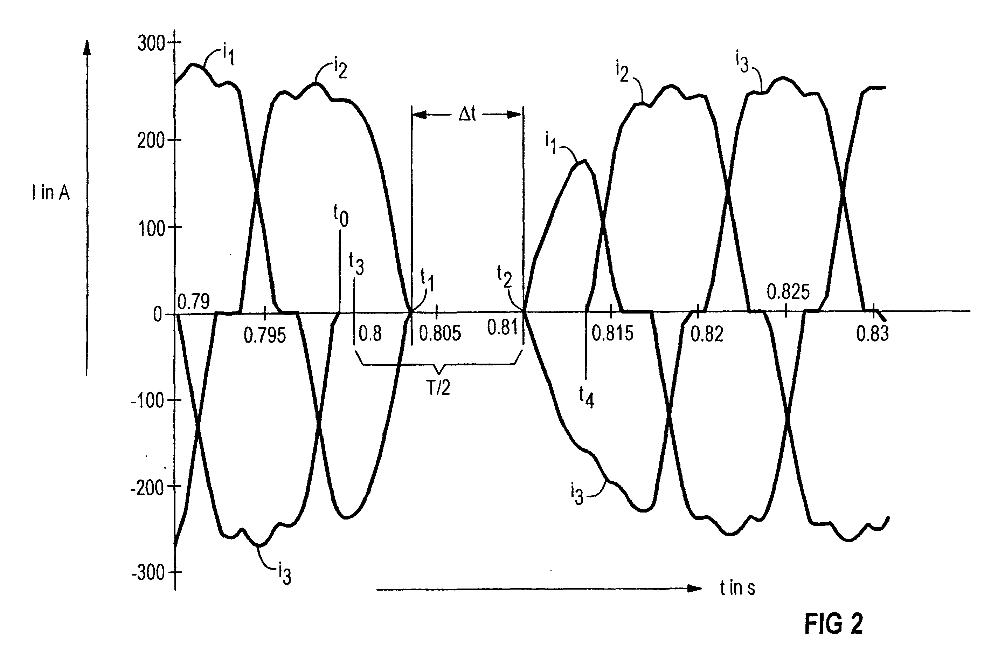

Im Diagramm gemäß FIG 2 ist zu erkennen, daß der Stator der Induktionsmaschine in einem Zeitabschnitt $\Delta t$ stromlos ist, d.h. alle Statorströme $i_{1,2,3}$ sind in diesem Zeitabschnitt $\Delta t$ gleich Null.

Der stromlose Stator wird nun erzeugt, indem zunächst keine Zündimpulse an die Thyristoren 6 (FIG 1) gegeben werden. Hierdurch kommt es zur Erstlöschung des Stromes in einer der drei Stator-Wicklungen, im Beispiel zum Zeitpunkt $t_0$ der Strom $i_3$ in der Phase L3 (erstlöschende Phase). Anschließend verlöschen zum Zeitpunkt $t_1$ auch die Ströme $i_1$, $i_2$ in den beiden verbleibenden Wicklungen bzw. Phasen L1,L2, so daß im Zeitabschnitt $\Delta t$ zwischen $t_1$ und $t_2$ ein stromloser Stator vorliegt und die Auswertung der Klemmenspannung $u_{K12}, u_{K23}, u_{K31}$ beginnen kann.

Die induzierte Statorspannung an den Klemmen der elektrischen Maschine ergibt sich für den statorstromlosen Fall im Stator-Koordinatensystem zu:

$$u_s^{\angle} = L_h \cdot \frac{d}{dt}\left(i_R^{\angle} \cdot e^{j\gamma}\right)$$

$u_S^{\angle}$    - Raumzeiger der Statorspannung
$L_h$    - Hauptinduktivität der Maschine
$i_R^{\angle}$    - Raumzeiger des Rotorstromes
$\gamma$ -    Verdrehwinkel des Rotorstrom-Raumzeigers gegenüber dem Stator-Koordinatensystem

Durch Differentiation erhält man:

$$u_s^{\angle} = L_h \cdot \left(e^{j\gamma} \cdot \frac{di_R^{\angle}}{dt} + j \cdot \omega \cdot e^{j\gamma} \cdot i_R^{\angle}\right)$$

$\omega$    - Elektrische Winkelgeschwindigkeit des Rotors mit $\omega = d\gamma/dt$

Da die zeitliche Änderung des abklingenden Rotor-Gleichstromes vernachlässigbar klein gegenüber der Änderung infolge der Rotation ist, kann in vorstehender Gleichung der erste Summand in der Klammer vernachlässigt werden, wodurch sich ergibt:

$$u_S^{\angle} \cong j \cdot L_h \cdot \omega \cdot e^{j \cdot \gamma} \cdot i_R^{\angle}$$

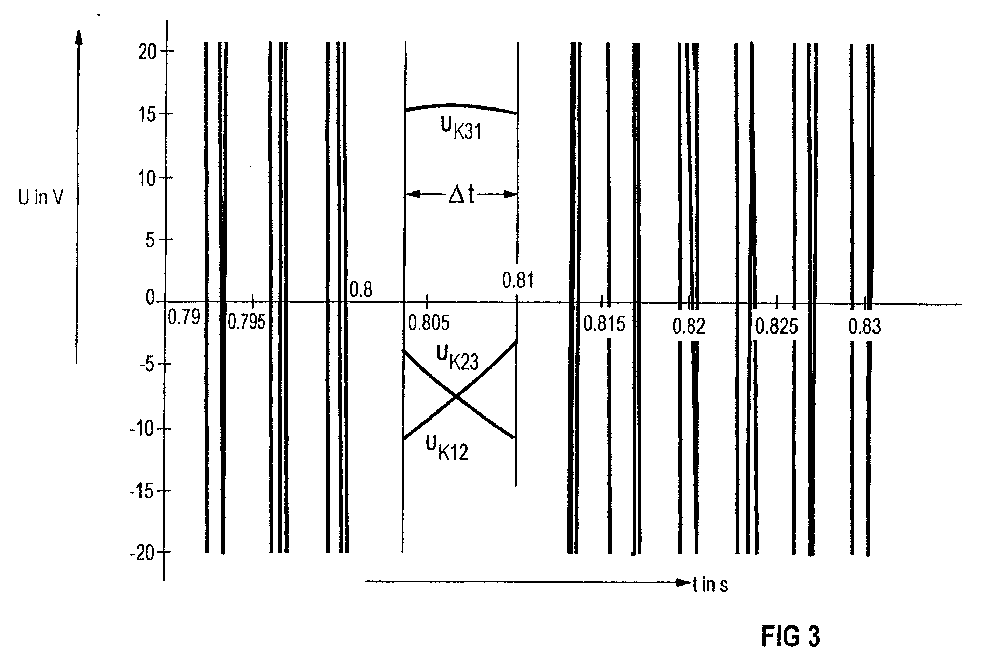

Hieraus geht hervor, daß der Winkel zwischen Statorspannungs-Raumzeiger $u_S^{\angle}$ und auf den Stator bezogenen Rotorstrom-Raumzeiger $i_R^{\angle}$ konstant ist und damit die Frequenz der induzierten Klemmenspannung $u_{K12}, u_{K23}, u_{K31}$ der elektrischen Winkelgeschwindigkeit des Rotors entspricht. Der zeitliche Verlauf der Klemmenspannungen $u_{K12}, u_{K23}, u_{K31}$ ist in FIG 3 dargestellt.

Die Bestimmung der Lage des Statorspannungs-Raumzeigers $u_S^{\angle}$ aus den drei gemessenen Klemmenspannungen $u_{K12}, u_{K23}, u_{K31}$ erfolgt nun mittels einer an sich bekannten Koordinaten-Transformation:

$$u_S^{\angle} = u_{SX} + j \cdot u_{SY} = \left( \frac{2}{3} \cdot u_{K12} - \frac{1}{3} \cdot u_{K23} - \frac{1}{3} \cdot u_{K31} \right) + j \cdot \left( \frac{1}{\sqrt{3}} \cdot u_{K23} - \frac{1}{\sqrt{3}} \cdot u_{K31} \right)$$

$u_{SX}$          - x-Komponente des Statorspannungs-Raumzeigers $u_S^{\angle}$

$u_{SY}$          - y-Komponente des Statorspannungs-Raumzeigers $u_S^{\angle}$

$u_{K12}, u_{K23}, u_{K31}$    - zwischen den Statorklemmen K1, K2 und K3 meßbare Spannungen

Die räumliche Orientierung (Winkel) $\gamma$ des Statorspannungs-Raumzeigers $u_S^{\angle}$ ergibt sich aus der bekannten Beziehung:

$$\gamma = \arg\left(u_S^{\angle}\right) = \arctan\left(\frac{u_{SY}}{u_{SX}}\right)$$

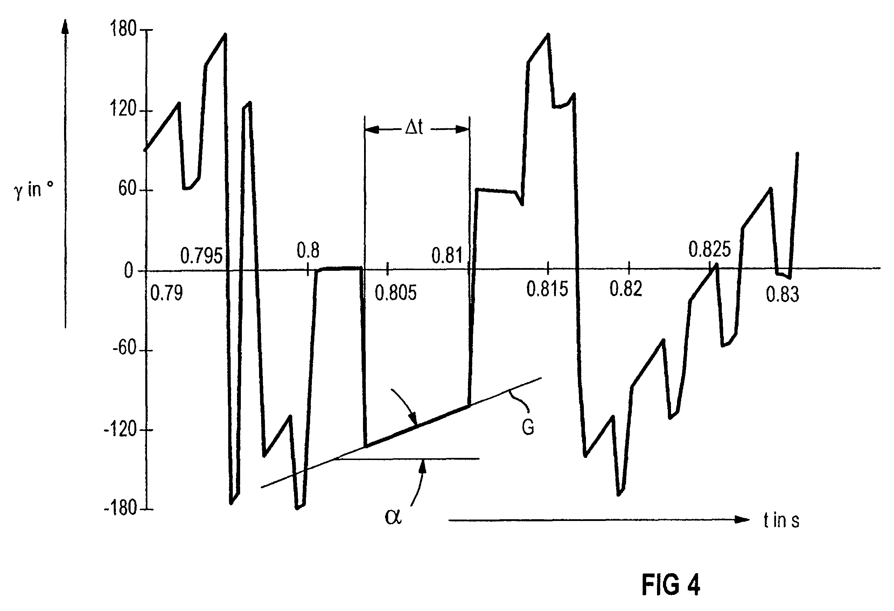

Mittels mehrfacher Bestimmung der Klemmenspannungen $u_{K12,K23,K31}$ und Berechnung des Winkels $\gamma$ innerhalb des statorstromlosen Zeitabschnittes $\Delta t$ werden mehrere Meßwerte der räumlichen Lage des Statorspannungs-Raumzeigers $u_S^{\angle}$ gewonnen. Diese sind im Diagramm gemäß FIG 4 gegen die Zeit aufgetragen. Diese Werte ergeben idealerweise für konstante Geschwindigkeit eine Gerade G, deren Steigung $\alpha$ direkt der gesuchten elektrischen Winkelgeschwindigkeit $\omega$ des Rotors entspricht.

Um einen zuverlässigen Meßwert der elektrischen Rotor-Winkelgeschwindigkeit zu erhalten und den Einfluß von Meßfehlern zu minimieren, wird die Steigung mit Hilfe einer Ausgleichsgeraden bestimmt, die durch geeignete mathematische Verfahren, vorzugsweise durch Minimierung der Fehlerquadrate, aus den aufgenommenen Winkelwerten bestimmt werden kann.

Die mechanische Rotor-Winkelgeschwindigkeit ergibt sich nun aus der elektrischen Rotor-Winkelgeschwindigkeit durch einfache Division durch die bekannte Polpaarzahl p der Induktionsmaschine.

Um den Einfluß des stromlosen Zeitabschnitts auf den Antrieb gering zu halten, muß die Wiederzündung der Ventilsätze so erfolgen, daß sich Drehmoment und Statorströme annähernd so verhalten, wie es auch ohne Drehzahlmessung der Fall gewesen wäre.

Dies kann gemäß FIG 2 dadurch erfolgen, daß der Zündzeitpunkt $t_3$ der letzten, aber nicht ausgeführten Zündung der erstlöschenden Ventilanordnung V3 um eine halbe Netzperiode T (= 180°) erhöht und auf den Zeitpunkt $t_2 = t_3 + T/2$ gelegt wird. Um einen Stator-Stromfluß nach dieser Wiederzündung zu erhalten, wird auf den hieraus resultierenden Zündzeitpunkt $t_2$ auch die Wiederzündung der auf der erstlöschenden Ventilanordnung V3 in Netz-Drehrichtung folgenden Ventilanordnung V1 gelegt. Mit einsetzendem Stromfluß an der ersten Wiederzündung ist die eigentliche Drehzahlmessung abgeschlossen, da die induzierten Klemmenspannungen wieder durch den fließenden Statorstrom bestimmt werden und somit kein die Rotor-Winkelgeschwindigkeit beinhaltendes Meßsignal einschließen.

Somit steht, je nach Typ der elektrischen Maschine und Lastverhältnissen, ca. ein Drittel einer Netzperiode für die Drehzahlmessung zur Verfügung, was für das beschriebene Verfahren vollkommen ausreichend ist.

Die verbleibende Ventilanordnung V2 wird um eine Sechstel Netzperiode (= 60°) verzögert gegenüber dem erstlöschenden Ventilsatz im Zeitpunkt $t_4$ gezündet, womit der normale Rhythmus der Ventilzündungen wieder hergestellt ist.

**Patentansprüche**

1. Verfahren zum Messen der Drehzahl (n) einer Induktionsmaschine (2), deren Stator über einen steuerbaren Wechselstromsteller (4) mit Ventilanordnungen (V1,V2,V3) an ein ein- oder mehrphasiges Wechselspannungsnetz (L1,L2,L3) angeschlossen ist, **dadurch gekennzeichnet,**

   - **daß** der Stator für zumindest einen vorgegebenen Zeitabschnitt ($\Delta$t), der kleiner als eine halbe Periode (T) der Netzspannung ist, durch Steuern der Ventilanordnungen (V1, V2,V3) vom Wechselspannungsnetz (L1, L2, L3) getrennt wird,
   - **daß** in dem kleiner als eine halbe Periode (T) betragenden Zeitabschnitt ($\Delta$t) die im Stator durch die Drehbewegung des Läufers induzierte Spannung gemessen und hieraus die Komponenten ($U_{sx}$, $U_{sy}$) des Statorspannungs-Raumzeigers ($U_S$) bestimmt werden und
   - **daß** aus den so gewonnenen Meßwerten die Umlauffrequenz des Statorspannungs-Raumzeigers ($U_S$) ermittelt und daraus die Drehzahl (n) der Induktionsmaschine (2) abgeleitet wird.

2. Verfahren nach Anspruch 1, **dadurch gekennzeichnet, daß** die Drehzahl (n) der Induktionsmaschine (2) in mehreren zeitlich aufeinanderfolgenden Zeitabschnitten gemessen wird, deren Zeitabstand das 5- bis 15-fache der Periode (T) der Netzspannung beträgt.

3. Verfahren nach Anspruch 1, **dadurch gekennzeichnet, daß** für die Ventilanordnungen (V1,V2,V3) Thyristoren (6) verwendet werden und das Trennen der Induktionsmaschine (2) vom wechselspannungsnetz (L1,L2,L3) durch Auslassen der zum Zünden der Thyristoren (6) erforderlichen Zündsignale erfolgt.

4. Verfahren nach Anspruch 3, **dadurch gekennzeichnet, daß** bei einer dreiphasigen Induktionsmaschine (2) zur Wiederaufnahme des Netzbetriebes der Induktionsmaschine das erste Zündsignal für die zuerst geöffnete erste Ventilanordnung (V3) einer Phase (L3) um ein Mehrfaches der halben Netzperiode (T) gegenüber dem letzten Zündsignal für diese erste Ventilanordnung (V3) verzögert erfolgt und gleichzeitig mit dem erneuten Zünden dieser ersten Ventilanordnung (V3) eine im Normalbetrieb als zeitlich nachfolgende Ventilanordnung zu zündende zweite Ventilanordnung (V1) gezündet wird, und das Zünden der dritten Ventilanordnung (V2) um ein Sechstel der Netzperiode (T) nach dem Zünden der ersten Ventilanordnung (V3) erfolgt, wobei anschließend die vor dem Abschalten vorliegende Zündsignalfolge wieder hergestellt wird.

5. Verfahren nach einem der vorhergehenden Ansprüche, **dadurch gekennzeichnet, daß** bei einem mehrphasigen wechselspannungsnetz (L1,L2,L3) die in den Statorwicklungen zwischen den Statorklemmen (K1,K2,K3) jeweils induzierte Klemmenspannung ($u_{K12}$,$u_{K23}$,$u_{K31}$) gemessen wird.

6. Verfahren nach Anspruch 5, **dadurch gekennzeichnet, daß** aus den Meßwerten der Klemmenspannung ($u_{K12}$, $u_{K23}$,$u_{K31}$) jeweils der Winkel ($\gamma$) des Statorspannungs-Raumzeigers ($U_S$) der induzierten Statorspannung berechnet wird.

7. Verfahren nach Anspruch 6, **dadurch gekennzeichnet, daß** für eine Vielzahl von Zeitpunkten die zugehörigen Winkel ($\gamma$) des Statorspannungs-Raumzeigers ($U_S$) berechnet werden und für die innerhalb des Zeitabschnittes ($\Delta$t) vorliegenden, jeweils bestimmten Zeitpunkten zugeordneten Winkel ($\gamma$) eine Gerade (G) berechnet wird, aus deren Steigung ($\alpha$) die Drehzahl der Induktionsmaschine (2) bestimmt wird.

8. Einrichtung zur Ermittlung der Drehzahl einer Induktionsmaschine (2), deren Stator über einen Wechselstromsteller (4) an ein ein- oder mehrphasiges Wechselspannungsnetz (L1,L2,L3) angeschlossen ist, wobei eine Steuereinrichtung (8) zum Steuern, des Wechselstromstellers (4) vorhanden ist, **dadurch gekennzeichnet, daß** die Steuereinrichtung (8) gleichermaßen zum Trennen des Stators vom Wechselspannungsnetz (L1,L2,L3) für einen vorgegebenen Zeitabschnitt ($\Delta$t), der kleiner als eine halbe Periode (T) der Netzspannung ist, durch Steuern der Ventilanordnungen (V1,V 2,V3) des Wechselstromstellers (4) dient, und daß eine Spannungsmeßeinrichtung (10) zum Messen zumindest einer in diesem Zeitabschnitt ($\Delta$t) im Stator durch die Drehbewegung des Läufers induzierten Klemmenspannung ($u_{K12}$, $u_{K23}$, $u_{K31}$) und eine Recheneinrichtung (12) zum Berechnen der Frequenz dieser Klemmenspannung ($u_{K12}$,$u_{K23}$,$u_{K31}$) aus den so gewonnenen Meßwerten und zum Berechnen der Drehzahl (n) der Induktionsmaschine (2) aus dieser Frequenz vorhanden sind, wobei an einem Ausgang der Recheneinrichtung (12) ein aus der Drehzahl (n) abgeleitetes Steuersignal für die Steuereinrichtung (8) ansteht, das über eine Steuerleitung an die Steuereinrichtung (8) geführt ist.

**9.** Einrichtung nach Anspruch 8, **dadurch gekennzeichnet, daß** als Ventilanordnungen (V1,V2, V3) Thyristoren (6) vorgesehen sind.

**10.** Einrichtung nach einem der Ansprüche 8 oder 9, **dadurch gekennzeichnet, daß** bei einem mehrphasigen Wechselspannungsnetz (L1,L2,L3) zwischen den Statorklemmen (K1,K2,K3) jeweils eine Spannungsmeßeinrichtung (10) angeordnet ist.

**11.** Einrichtung nach Anspruch 8, **dadurch gekennzeichnet, daß** die Recheneinrichtung (12) eine erste Recheneinheit (14) zum Berechnen des Winkels ($\gamma$) des Raumzeigers der induzierten Statorspannung ($u_{SX}$, $u_{SY}$) aus den jeweiligen Meßwerten enthält, der ein Speicher (16) zum Speichern dieser Winkel ($\gamma$) nachgeschaltet ist.

**12.** Einrichtung nach Anspruch 11, **dadurch gekennzeichnet, daß** die Recheneinrichtung (12) eine zweite Recheneinheit (18) zum Berechnen der Steigung ($\alpha$) einer von den im Speicher (16) gespeicherten Winkel-Zeitpunkt-Wertepaaren gebildeten Geraden (G) und zum Ermitteln der Frequenz des Raumzeigers der induzierten Statorspannung ($U_{sx}$,$U_{sy}$) und der Drehzahl (n) der Induktionsmaschine (2).

**Claims**

**1.** Method for measuring the rotation speed (n) of an induction machine (2) whose stator is connected via a controllable AC controller (4) having active device arrangements (V1, V2, V3), to a single-phase or polyphase AC power supply system (L1, L2, L3), **characterised in that**,

- the stator is disconnected from the AC power supply system (L1, L2, L3) for at least one predetermined time period ($\Delta t$), which is less than half a period (T) of the power supply system voltage, by controlling the active device arrangements (V1, V2, V3),

- the voltage which is induced in the stator by rotary movement of a rotor is measured in the time period ($\Delta t$), which is less than half of a period (T), and used to determine the components ($u_{SX}$, $u_{SY}$) of the stator voltage space vector ($u_S$) and

- the rotation frequency of the stator voltage space vector ($U_s$) is determined from the measured values thus obtained and used to derive the rotation speed (n) of the induction machine (2).

**2.** Method according to Claim 1, **characterised in that** the rotation speed (n) of the induction machine (2) is measured in a number of successive time periods whose time interval is 5 to 15 times the period (T) of the power supply system voltage.

**3.** Method according to Claim 1, **characterised in that** thyristors (6), are used as the active device arrangements (V1, V2, V3) and the induction machine (2) is disconnected from the AC power supply system (L1, L2, L3) by omitting trigger signals which are required to trigger the thyristors (6).

**4.** Method according to Claim 3, **characterised in that** in order to resume power supply system operation of the induction machine in the case of a three-phase induction machine (2), the first trigger signal for the first-opened first active device arrangement (V3) is delayed in one phase (L3) by a multiple of half the period (T) with respect to the last trigger signal for this first active device arrangement (V3) and at the same time as triggering of this first active device arrangement (V3) is renewed, a second active device arrangement (V1) that is triggered subsequently in normal operation is triggered and the third active device arrangement (V2) is triggered one-sixth of the power supply system period (T) after the triggering of the first active device arrangement (V3), with the trigger signal sequence which was present before disconnection then being reproduced.

**5.** Method according to one of the preceding claims, **characterised in that**, in a polyphase AC power supply system (L1, L2, L3), the terminal voltage ($u_{K12}$, $u_{K23}$, $u_{K31}$), which is in each case induced in the stator windings between the stator terminals (K1, K2, K3) is measured.

**6.** Method according to Claim 5, **characterised in that** the angle ($\gamma$) of the space vector ($u_S$) of the induced stator voltage is calculated in each case, from the measured values of the terminal voltage ($u_{K12}$, $u_{K23}$, $u_{K31}$).

**7.** Method according to Claim 6, **characterised in that** associated angles ($\gamma$) of the stator voltage space vector ($u_S$) are calculated a plurality of times, and a straight line (G), from whose gradient ($\alpha$) the rotation speed of the induction machine (2) is determined, is calculated for the associated angles ($\gamma$) which occur, within the time period ($\Delta t$) and which are each associated with specific times.

**8.** A device for determining the rotation speed of an induction machine (2) whose stator is connected via an AC controller (4) to a single-phase or polyphase AC power supply system (L1, L2, L3), which has a control device (8) for controlling the AC controller (4), **characterised in that** the control device (8) is also used to disconnect the stator from the AC power supply system (L1, L2, L3) for a predetermined time period ($\Delta t$), which is shorter than half a period (T) of the power supply system voltage, by controlling the active device arrangements (V1, V2, V3) of the AC controller (4) and that it has a voltage measurement device (10) for measuring at least one terminal voltage ($u_{K12}$, $u_{K23}$, $u_{K31}$) which is induced in the stator by rotary movement of the rotor in the time period ($\Delta t$) and a computation device (12) for calculating the frequency of this terminal voltage ($u_{K12}$, $u_{K23}$, $u_{K31}$) from the measured values obtained in this way and for calculating the rotation speed (n) of the induction machine (2) from this frequency, with a control signal for the control device (8) being present at one output of the computation device (12), the control signal being derived from the rotation speed (n) and being passed to the control device (8) via a control line.

**9.** Device according to Claim 8, **characterised in that** thyristors (6) are provided as the active device arrangements (V1, V2, V3).

**10.** Device according to one of Claims 8 or 9, **characterised in that** a voltage measurement device (10) is arranged between each of the stator terminals (K1, K2, K3) in a polyphase AC power supply system (L1, L2, L3).

**11.** Device according to Claim 8, **characterised in that** the computation device (12) includes a first computation unit (14) for calculating the angle ($\gamma$) of the space vector of the induced stator voltage ($u_{SX}$, $u_{SY}$) from respective measured values, behind which a memory (16) is connected for storing these angles ($\gamma$).

**12.** Device according to Claim 11, **characterised in that** the computation device (12) includes a second computation unit (18) for calculating the gradient ($\alpha$) of a straight line (G), which is formed by angle and time value pairs stored in the memory (16), and for determining the frequency of the space vector of the induced stator voltage ($u_{SX}$, $u_{SY}$) and the rotation speed (n) of the induction machine (2).

**Revendications**

**1.** Procédé pour mesurer la vitesse de rotation (n) d'une machine à induction (2) dont le stator est raccordé par l'intermédiaire d'un gradateur de courant alternatif commandable (4) comportant des dispositifs formant soupapes (V1, V2, V3) à un réseau de tension alternative monophasé ou polyphasé (L1, L2, L3), **caractérisé par le fait que**

- pour au moins un intervalle de temps prédéterminé ($\Delta t$) qui est inférieur à une moitié de période (T) de la tension de réseau, on coupe le stator du réseau de tension alternative (L1, L2, L3) en commandant les dispositifs formant soupapes (V1, V2, V3),
- dans l'intervalle de temps ($\Delta t$) inférieur à une moitié de période (T), on mesure la tension induite dans le stator par la rotation du rotor et on en détermine les composantes ($U_{sx}$, $U_{sy}$) du vecteur spatial de tension statorique ($U_s$) et
- à partir des valeurs mesurées ainsi obtenues, on détermine la fréquence de rotation du vecteur spatial de tension statorique ($U_s$) et on en déduit la vitesse de rotation (n) de la machine à induction (2).

**2.** Procédé selon la revendication 1, **caractérisé par le fait qu'**on mesure la vitesse de rotation (n) de la machine à induction (2) dans plusieurs intervalles de temps successifs dont l'écart temporel vaut 5 à 15 fois la période (T) de la tension de réseau.

**3.** Procédé selon la revendication 1, **caractérisé par le fait qu'**on utilise des thyristors (6) pour les dispositifs formant soupapes (V1, V2, V3) et qu'on effectue la coupure entre la machine à induction (2) et le réseau de tension alternative (L1, L2, L3) en supprimant les signaux d'amorçage nécessaires à l'amorçage des thyristors (6).

**4.** Procédé selon la revendication 3, **caractérisé par le fait que**, dans le cas d'une machine à induction (2) triphasée, pour la reprise du fonctionnement sur réseau de la machine à induction, le premier signal d'amorçage pour le premier dispositif formant soupape (V3) d'abord ouvert d'une phase (L3) s'effectue avec un retard d'un multiple de la moitié de période de réseau (T) par rapport au dernier signal d'amorçage pour ce premier dispositif formant soupape (V3) et, en même temps que le nouvel amorçage de ce premier dispositif formant soupape (V3), on amorce un deuxième dispositif formant soupape (V1) à amorcer en fonctionnement normal en tant que dispositif formant soupape suivant et l'amorçage du troisième dispositif formant soupape (V2) s'effectue avec un retard d'un sixième de la période de réseau (T) après l'amorçage du premier dispositif formant soupape (V3), la succession de signaux d'amorçage existant avant la coupure étant ensuite rétablie.

5. Procédé selon l'une des revendications précédentes, **caractérisé par le fait que**, dans le cas d'un réseau de tension alternative (L1, L2, L3) polyphasé, on mesure la tension aux bornes ($u_{K12}$, $u_{K23}$, $u_{K31}$) induite respectivement dans les enroulements statoriques entre les bornes de stator (K1, K2, K3).

6. Procédé selon la revendication 5, **caractérisé par le fait que**, à partir des valeurs mesurées de la tension aux bornes ($u_{K12}$, $u_{K23}$, $u_{K31}$), on calcule respectivement l'angle ($\gamma$) du vecteur spatial de tension statorique ($U_s$) de la tension statorique induite.

7. Procédé selon la revendication 6, **caractérisé par le fait que**, pour plusieurs instants, on calcule les angles associés ($\gamma$) du vecteur spatial de tension statorique ($U_s$) et, pour les angles ($\gamma$) présents à l'intérieur de l'intervalle de temps ($\Delta t$) et associés à chaque fois à des instants déterminés, on calcule une droite (G) à partir de la pente ($\alpha$) de laquelle on détermine la vitesse de rotation de la machine à induction (2).

8. Dispositif pour déterminer la vitesse de rotation d'une machine à induction (2) dont le stator est raccordé par l'intermédiaire d'un gradateur de courant alternatif commandable (4) à un réseau de tension alternative monophasé ou polyphasé (L1, L2, L3), un dispositif de commande (8) étant prévu pour la commande du gradateur de courant alternatif (4), **caractérisé par le fait que** le dispositif de commande (8) sert également à couper le stator du réseau de tension alternative (L1, L2, L3) pour un intervalle de temps prédéterminé ($\Delta t$) qui est inférieur à une moitié de période (T) de la tension de réseau en commandant les dispositifs formant soupapes (V1, V2, V3) du gradateur de courant alternatif (4) et il est prévu un dispositif de mesure de tension (10) pour mesurer au moins une tension aux bornes ($u_{K12}$, $u_{K23}$, $u_{K31}$) induite dans le stator par la rotation du rotor pendant cet intervalle de temps ($\Delta t$) et un dispositif de calcul (12) pour calculer la fréquence de cette tension aux bornes ($u_{K12}$, $u_{K23}$, $u_{K31}$) à partir des valeurs mesurées ainsi obtenues et pour calculer la vitesse de rotation (n) de la machine à induction (2) à partir de cette fréquence, un signal de commande déduit de la vitesse de rotation (n) et destiné au dispositif de commande (8) étant présent à une sortie du dispositif de calcul (12), lequel signal de commande est envoyé au dispositif de commande (8) par l'intermédiaire d'une ligne de commande.

9. Dispositif selon la revendication 8, **caractérisé par le fait que** des thyristors (6) sont prévus comme dispositifs formant soupapes (V1, V2, V3).

10. Dispositif selon l'une des revendications 8 ou 9, **caractérisé par le fait que**, dans le cas d'un réseau de tension alternative (L1, L2, L3) polyphasé, un dispositif de mesure de tension (10) est placé à chaque fois entre les bornes de stator (K1, K2, K3).

11. Dispositif selon la revendication 8, **caractérisé par le fait que** le dispositif de calcul (12) contient une première unité de calcul (14) pour calculer l'angle ($\gamma$) du vecteur spatial de la tension statorique induite ($u_{SX}$, $u_{SY}$) à partir des valeurs mesurées respectives, une mémoire (16) pour mémoriser ces angles ($\gamma$) étant branchée du côté aval de cette première unité de calcul.

12. Dispositif selon la revendication 11, **caractérisé par le fait que** le dispositif de calcul (12) contient une deuxième unité de calcul (18) pour calculer la pente ($\alpha$) d'une droite (G) formée par les paires de valeurs instantanées d'angles mémorisées dans la mémoire (16) et pour déterminer la fréquence du vecteur spatial de la tension statorique induite ($U_{sx}$, $U_{sy}$) et la vitesse de rotation (n) de la machine à induction (2).

**FIG 1**

FIG 2

EP 1 116 322 B1

FIG 3

EP 1 116 322 B1

FIG 4